# EUROPÄISCHE PATENTSCHRIFT

(11) **EP 2 483 141 B1**
(45) Veröffentlichungstag und Bekanntmachung des Hinweises auf die Patenterteilung: **27.11.2013**
(21) Anmeldenummer: 10770948.7
(22) Anmeldetag: 29.09.2010
(51) Int. Cl.: B62K 25/24

(54) **VORDERRADAUFHÄNGUNG FÜR EIN EINSPURIGES FAHRZEUG**
FRONT SUSPENSION ASSEMBLY FOR SINGLE-TRACK VEHICLE
SUSPENSION AVANT POUR VÉHICULE MONOTRACE

(30) Priorität: 02.10.2009 AT 15552009
(43) Veröffentlichungstag der Anmeldung: 08.08.2012
(73) Patentinhaber: Trebichavsky, Martin, 1020 Wien (AT)
(72) Erfinder: Trebichavsky, Martin, 1020 Wien (AT)
(74) Vertreter: Miksovsky, Alexander
(86) Internationale Anmeldenummer: PCT/AT2010/000356
(87) Internationale Veröffentlichungsnummer: WO 2011/038431

(56) Entgegenhaltungen:
- EP-A1- 0 468 138
- EP-A1- 1 616 780
- EP-A2- 1 059 227
- DE-A1- 3 110 369
- DE-U1- 9 404 873
- FR-A1- 2 832 121
- JP-A- 63 145 186
- US-A- 5 743 547
- US-A- 6 036 211
- US-A1- 2008 236 923
- Peter Müller et Al: "Die innovative Duolever-Vorderradführung der BMW K1200S- Vom Konzept zur Realisierung"[Online] 31. Oktober 2007 (2007-10-31), Seiten 1-10, XP002615637 Gefunden im Internet: URL:http://web.archive.org/web/20071031210 219/http://www.tuev-sued.de/uploads/images /1134917333803500019330/31_reichl_d.pdf> [gefunden am 2011-01-04]

## Beschreibung

Die vorliegende Erfindung bezieht sich auf eine Vorderradaufhängung für ein einspuriges Fahrzeug, insbesondere Motorrad, Fahrrad oder dgl., wobei an einem gabelartigen Radträger ein Vorderrad drehbar gelagert ist und der Radträger mit einem Rahmen und einem mit einem Lenker verbundenen Lenkholm des Fahrzeugs gekoppelt bzw. koppelbar ist, wobei der Lenkholm mit dem Radträger über eine Hebelverbindung gekoppelt ist, wobei der Radträger über eine davon getrennte gelenkige Verbindung mit wenigstens einem Rahmenholm gekoppelt ist, und wobei die gelenkige Verbindung eine im wesentlichen vertikale Schwenkachse im wesentlichen in einer Linie zwischen der Anlenkung des Lenkholms an dem Rahmen und der Lagerung des Vorderrads am Radträger und im wesentlichen parallel zu dem Lenkholm aufweist.

Neben einer üblichen und bekannten Anlenkung eines Vorderrades an einem von einem Gabelholm gebildeten, im wesentlichen starren Radträger, der über einen entsprechenden Lenkholm direkt mit einem Lenker gekoppelt bzw. koppelbar ist, ist es bekannt, einen derartigen gabelartigen Radträger mit Teleskoparmen auszubilden, um einen Dämpfungseffekt im Bereich der Vorderradaufhängung für ein einspuriges Fahrzeug zu erzielen.

Darüber hinaus sind Aufhängungen für ein Vorderrad für ein einspuriges Fahrzeug bekannt, bei welchen auf eine Teleskopgabel verzichtet wird, um beispielsweise insbesondere ein schlechtes Ansprechverhalten einer Federung in einer linearen Teleskopführung und eine damit verbundene hohe Belastung eines Fahrwerks bzw. Rahmens zu vermeiden. In diesem Zusammenhang ist beispielsweise ein Parellelogrammlenker mit zwei Längslenkern bekannt, die an dem Rahmen des einspurigen Fahrzeugträgers gelagert sind. Zur Erzielung der Lenkbarkeit ist an den vorderen Enden der Längslenker jeweils ein Vorderradträger beispielsweise mittels eines Kugelgelenks angebracht. Eine Lenkmomentübertragung zwischen einem rahmenfesten Lenker und dem Vorderradträger erfolgt über einen Scherenlenker, welcher wiederum aus einem Kugelgelenk und zwei weiteren Drehlagerungen besteht. Das Federelement wirkt direkt auf einen unteren Längslenker und stützt sich gegen den Rahmen ab, wobei unmittelbar ersichtlich ist, dass durch die Vielzahl von zu verwendenden Lenkern und Gelenken eine überaus aufwendige Konstruktion erforderlich ist. Ähnliche Lösungen sind beispielsweise in DE 40 23 821 A1, DE 102 09 390 A1, DE 10 2006 016 183 A1, DE 101 23 940 A1, WO 2007/115668 A1 oder EP 0 321 803 (IT 2320687) beschrieben. Nachteilig sind allgemein, wie bereits oben erwähnt, ein überaus komplizierter Aufbau und ein damit verbundenes hohes Gewicht als auch eine im wesentlichen indirekte Lenkung.

Aus der FR 2 687 976 A1 ist ein Fahrzeug bekannt geworden, wobei eine Vorderradaufhängung beidseitig durch eine als Hebelverbindung ausgebildete untere Schwinge in Verbindung mit einem Feder-Dämpfer-System realisiert wird. Darüber hinaus zeigt die US 5 299 820 A eine abgewandelte Ausführungsform einer Vorderradaufhängung, wobei mehrere Schwingen bzw. hebelartige Elemente in unterschiedlichen Ebenen mit einem Stoßabsorber kombiniert sind.

Weiters zeigen die EP 0 796 782 A2 sowie die CA 2 453 046 A1 unterschiedliche Ausbildungen von Hinterradaufhängungen, wobei Kräfte auf ein stoßabsorbierendes Element eingeleitet werden. Aufgrund der nicht vorgesehenen Lenkbarkeit eines Hinterrades sind derartige Aufhängungen für Hinterräder eines zweirädrigen Fahrzeugs, insbesondere Fahrrads, nicht unmittelbar mit den oben genannten Ausbildungen von Vorderradaufhängungen vergleichbar bzw. kombinierbar.

Eine weitere Gruppe von Lösungen unter Verzicht auf eine Teleskopgabel schlägt einen Parallelogrammlenker vor, welcher direkt an einem Lenkerträger angebracht ist, wobei hiezu beispielsweise auf WO 2007/131590 A1, DE 197 51 252 A1 oder US-PS 4,433,850 verwiesen werden kann. Nachteilig bei diesen Ausführungsformen sind insbesondere hohe kinematische Kräfte in Längsträgern und ein großes Massenträgheitsmoment um die Längsachse.

Eine weitere Gruppe von Vorschlägen unter Verzicht auf eine Teleskopgabel besteht aus Konzepten unter Verwendung von Doppellängslenkern, wobei das Vorderrad in einer Radnabe gelagert ist und eine Lenkung indirekt mittels Spurstangen erfolgt, wobei hiezu beispielsweise auf US-PS 4,834,412, FR 2 601 641 A1, DE 196 25 316 A1 oder EP 0 469 475 A1 verwiesen wird. Nachteilig bei diesen Ausführungsformen sind wiederum ein hoher konstruktiver Aufwand, eine indirekte Lenkung und insbesondere ein eingeschränkter Lenkeinschlag. Darüber hinaus ist bei sämtlichen vorgenannten Ausführungsformen nachteilig, dass sie aufgrund der Konstruktion über einen begrenzten Federweg verfügen, welcher insbesondere bei derartigen einspurigen Fahrzeugen im Gelände, beispielsweise als Geländemotorrad oder als Gelände-Fahrrad oder Mountainbike oder dgl. unzureichend ist.

Ausbildungen einer Vorderradaufhängung für ein einspuriges Fahrzeug ähnlich der eingangs genannten Art sind darüber hinaus beispielsweise der EP 1 616 780 A1, auf welcher der Oberbegriff von Anspruch 1 basiert, EP 0 468 138 A1, FR 2 832 121 A1, EP 1 059 227 A2, JP 63 145186A, US 2008/236923 A1, DE 94 04 873 U1, US 5 743 547 A, DE 31 53 297 C2 und der US 6 036 211 A zu entnehmen.

Die vorliegende Erfindung zielt darauf ab, eine Vorderradaufhängung für ein einspuriges Fahrzeug der eingangs genannten Art zur Verfügung zu stellen, bei welcher die oben erwähnten Nachteile und Probleme bekannter Ausführungsformen minimiert oder eliminiert werden und insbesondere eine verbesserte Federung bei verbesserter Lenkbarkeit und einer insbesondere verringerten bewegbaren und ungefederten Masse sowie bei einer verbesserten Einleitung und Verteilung der Kräfte zur Verfügung gestellt wird.

Zur Lösung dieser Aufgaben ist eine Vorderradaufhängung für ein einspuriges Fahrzeug der eingangs genannten Art im wesentlichen dadurch gekennzeichnet, dass der Lenkholm von einem das Vorderrad teilweise umgreifenden Gabelhoim gebildet ist, welcher an seinen vom Lenker abgewandten Enden über die Hebelverbindung mit dem gabelartigen Radtrager gekoppelt ist. Oa für die Vorderradaufhängung eine Hebelverbindung zur Kopplung zwischen dem Lenkholm mit dem gabelartigen Radträger und eine davon getrennte gelenkige Verbindung des Radträgers mit wenigstens einem Rahmenholm zur Verfügung gestellt werden, gelingt es, insbesondere eine konstruktiv einfache Ausführungsform zur Verfügung zu stellen, welche die oben erwähnten Anforderungen insbesondere im Hinblick auf eine verbesserte Federung bei minimaler Ansprechverzögerung, auf eine direkte Lenkung und auf eine Bereitstellung einer geringen ungefederten Masse erfüllt. Darüber hinaus gelingt es durch die erfindungsgemäße Konstruktion, die auf den Rahmen wirkenden und zu übertragenden Belastungen zu minimieren bzw. auf unterschiedliche Stellen des Rahmens zu verteilen, so dass auch die Anforderungen an den Rahmen bzw. das Fahrwerk des einspurigen Fahrzeugs verringert werden. Für einen ausreichend großen Lenkeinschlag bei gleichzeitig niedrigem Massenträgheitsmoment um die Lenkachse wird vorgeschlagen, dass die gelenkige Verbindung eine im wesentlichen vertikale Schwenkachse im wesentlichen in einer Linie zwischen der Anlenkung des Lenkholms an dem Rahmen und der Lagerung des Vorderrads am Radträger und im wesentlichen parallel zu dem Lenkholm aufweist. Für eine weitere Verbesserung der Einleitung und Verteilung der in den Rahmen einzubringenden Kräfte wird somit erfindungsgemäß vorgeschlagen, dass der Lenkholm von einem das Vorderrad teilweise umgreifenden Gabelholm gebildet ist, welcher an seinen vom Lenker abgewandten Enden über die Hebelverbindung mit dem gabelartigen Radträger gekoppelt ist.

Zur Erzielung der gewünschten direkten Lenkung als auch einer entsprechenden Steifigkeit der Aufhängung wird darüber hinaus vorgeschlagen, dass die Hebelverbindung in Abstand von der Lagerung der Achse des Vorderrads am Radträger angreift, wie dies einer weiters bevorzugten Ausführungsform der erfindungsgemäßen Aufhängung entspricht.

Zur Bereitstellung einer entsprechend sicheren und zuverlässigen Lagerung des Radträgers und zur Einbringung von auf das Vorderrad wirkenden Kräfte in den Rahmen wird gemäß einer weiters bevorzugten Ausführungsform vorgeschlagen, dass die Kopplung des Radträgers mit wenigstens einem Rahmenholm über eine Gelenkhebelverbindung erfolgt.

Zur Erzielung einer entsprechenden Federwirkung bei niedrigen ungefederten Massen und gleichzeitig zur Bereitstellung von großen Federwegen, wie sie insbesondere für Geländefahrzeuge gewünscht bzw. erforderlich sind, wird darüber hinaus gemäß einer weiters bevorzugten Ausführungsform vorgeschlagen, dass die von einer Gelenkhebelverbindung gebildete gelenkige Verbindung von einer schwenkbar an einem Rahmenholm angelenkten Schwinge und einem schwenkbaren, damit gekoppelten Federbein gebildet ist, welches an einem weiteren Rahmenholm, insbesondere einem einen Sattel aufnehmenden Rahmenholm angelenkt ist.

Zur Erzielung einer insbesondere kinematischen progressiven Federbeinbetätigung wird darüber hinaus vorgeschlagen, daß der Federweg des Federbeins einstellbar ist, wie dies einer weiters bevorzugte Ausführungsform der erfindungsgemäßen Vorderradaufhängung entspricht.

Zur Bereitstellung einer Vorderradaufhängung für unterschiedliche Einsatzzwecke und für eine einfache Verstellbarkeit unterschiedlicher Parameter der erfindungsgemäßen Vorderradaufhängung wird darüber hinaus bevorzugt vorgeschlagen, daß Verstellwege der Hebelverbindung und/oder der gelenkigen Verbindung einstellbar bzw. begrenzbar ausgebildet sind.

Mit der erfindungsgemäßen Vorderradaufhängung lassen sich insbesondere die nachfolgenden, nochmals zusammengefaßten Vorteile bei einfachem konstruktivem Aufbau erzielen, welcher somit auch in einfacher Weise für eine Serienproduktion einsetzbar ist:
- minimale Ansprechverzögerung der Federung;
- direkte Lenkung;
- kleines Massenträgheitsmoment um die Lenkachse;
- hohe Steifigkeit der Aufhängung;
- niedrige ungefederte Masse;
- Bremsnickausgleich, kinematisch einstellbar;
- niedrige Strukturbelastung des Fahrwerks bzw. Rahmens;
- möglichst kleine Änderung von Nachlauf und Lenkwinkel beim Einfedern;
- große Federwege für Geländefahrzeuge;
- kinematisch progressive Federbeinbetätigung, leicht verstellbar;
- ausreichende Bodenfreiheit bei jedem Fahrzustand, insbesondere bei Kurvenfahrt.

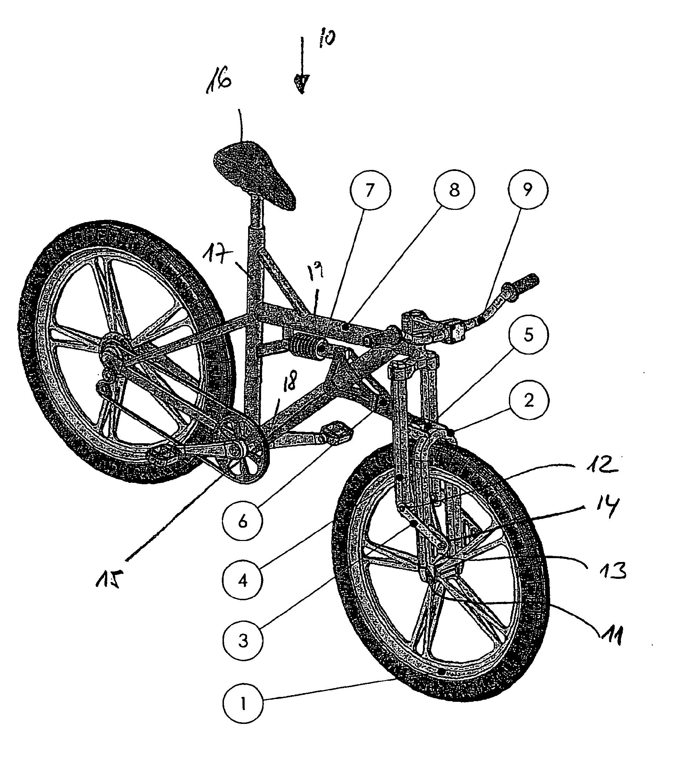

Die Erfindung wird nachfolgend anhand eines in der beiliegenden Zeichnung schematisch dargestellten Ausführungsbeispiels für ein Gelände-Fahrrad bzw. Mountainbike näher erörtert. Hiebei wird angemerkt, daß die erfindungsgemäße Konstruktion der Vorderradaufhängung auch bei von einem Fahrrad verschiedenen, einspurigen Fahrzeugen, wie Motorrädern, Mopeds oder dgl. ebenfalls unmittelbar anwendbar bzw. einsetzbar ist.

Bei dem in der Figur dargestellten Fahrrad, welches allgemein mit 10 bezeichnet ist, ist ersichtlich, daß ein Vorderrad 1 an einem gabelförmigen Radträger 2 gelagert ist, wobei eine Achse der Lagerung des Vorderrads 1 an den Enden des gabelförmigen Radträgers 2 mit 11 bezeichnet ist.

Der gabelförmige Radträger 2 ist einerseits über eine Hebelverbindung bzw. untere Schwinge 3 an seinen beiden Holmen jeweils mit unteren Enden 12 eines das Vorderrad 1 wenigstens teilweise umgreifenden Lenkgabelholms 4 verbunden, wobei der Lenkholm 4 in an sich bekannter Weise mit einem mit 9 bezeichneten Lenker gekoppelt ist. Neben der gelenkigen Kopplung der Hebelverbindung 3 im Bereich der Achse 12 an den unteren Enden des Lenkholms 4 ist eine weitere gelenkige Anlenkung an einem mit dem gabelartigen Radträger 2 gekoppelten Element 13 mit 14 bezeichnet.

Darüber hinaus ist der gabelartige Radträger 2 an seinem von der Achse 11 zur Lagerung des Vorderrads 1 abgewandten Ende über ein insbesondere als Winkelgelenk ausgebildetes Gelenk 5 mit einer weiteren, allgemein mit 6 bezeichneten Gelenkhebelverbindung bzw. oberen Schwinge mit dem allgemein mit 8 bezeichneten Rahmen gekoppelt. Hiebei ist die Gelenkhebelverbindung 6 neben der gelenkigen bzw. schwenkbaren Kopplung um eine Achse 15 an einem im wesentlichen schräg verlaufenden Rahmenholm 18 über ein zusätzliches Federbein 7 mit weiteren Rahmenholmen gekoppelt. Bei der in der Figur dargestellten Ausführungsform erfolgt eine Kopplung mit einem oberen bzw. im wesentlichen horizontal verlaufenden Rahmenholm 19 als auch mit einem einen Sattel 16 aufnehmenden Rahmenholm 17.

Die Länge des Federbeins 7 bzw. der wirksame Federweg des Federbeins 7 ist hiebei einstellbar.

Darüber hinaus sind insbesondere für unterschiedliche Einsatzzwecke die Hebel- bzw. Gelenkwege sämtlicher Hebel- als auch Gelenkverbindungen 3, 6 einstellbar bzw. begrenzbar.

Anstelle der in der Figur dargestellten Ausführungsform kann eine Anlenkung einzelner Gelenkverbindungen und insbesondere der getrennten bzw. zusätzlichen gelenkigen Verbindungen an unterschiedlichen Anlenkpunkten und insbesondere an voneinander getrennten Rahmenholmen vorgesehen sein.

## Patentansprüche

1. Vorderradaufhängung für ein einspuriges Fahrzeug, insbesondere Motorrad, Fahrrad oder dgl., wobei an einem gabelartigen Radträger (2) ein Vorderrad (1) drehbar gelagert ist und der Radträger (2) mit einem Rahmen und einem mit einem Lenker (9) verbundenen Lenkholm (4) des Fahrzeugs gekoppelt bzw. koppelbar ist, wobei der Lenkholm (4) mit dem Radträger (2) über eine Hebelverbindung (3) gekoppelt ist, wobei der Radträger (2) über eine davon getrennte gelenkige Verbindung (5, 6, 7) mit wenigstens einem Rahmenholm (17, 18, 19) gekoppelt ist, und wobei die gelenkige Verbindung eine im wesentlichen vertikale Schwenkachse (5) im wesentlichen in einer Linie zwischen der Anlenkung des Lenkholms (4) an dem Rahmen (8) und der Lagerung des Vorderrads (1) am Radträger (2) und im wesentlichen parallel zu dem Lenkholm (4) aufweist, **dadurch gekennzeichnet, dass** der Lenkholm (4) von einem das Vorderrad teilweise umgreifenden Gabelholm gebildet ist, welcher an seinen vom Lenker (9) abgewandten Enden über die Hebelverbindung (3) mit dem gabelartigen Radträger (2) gekoppelt ist.

2. Vorderradaufhängung nach Anspruch 1, **dadurch gekennzeichnet, dass** die Hebelverbindung (3) in Abstand von der Lagerung der Achse (11) des Vorderrads (1) am Radträger (2) angreift.

3. Vorderradaufhängung nach Anspruch 1 oder 2, **dadurch gekennzeichnet, dass** die Kopplung des Radträgers (2) mit wenigstens einem Rahmenholm (17, 18, 19) über eine Gelenkhebelverbindung (5, 6, 7) erfolgt.

4. Vorderradaufhängung nach einem der Ansprüche 1 bis 3, **dadurch gekennzeichnet, dass** die von einer Gelenkhebelverbindung gebildete gelenkige Verbindung von einer schwenkbar an einem Rahmenholm angelenkten Schwinge (6) und einem schwenkbaren, damit gekoppelten Federbein (7) gebildet ist, welches an einem weiteren Rahmenholm (17, 19), insbesondere einem einen Sattel (16) aufnehmenden Rahmenholm angelenkt ist.

5. Vorderradaufhängung nach Anspruch 4, **dadurch gekennzeichnet, dass** der Federweg des Federbeins (7) einstellbar ist.

6. Vorderradaufhängung nach einem der Ansprüche 1 bis 5, **dadurch gekennzeichnet, dass** Verstellwege der Hebelverbindung (3) und/oder der gelenkigen Verbindung (5, 6, 7) einstellbar bzw. begrenzbar ausgebildet sind.

## Claims

1. A front wheel suspension for a single-track vehicle, in particular a motorcycle, bicycle, or the like, wherein a front wheel (1) is rotatably supported on a fork-like wheel carrier (2) and the wheel carrier (2) is or can be coupled to a frame and a steering bar (4) of the vehicle connected to a handlebar (9), wherein the steering bar (4) is coupled to the wheel carrier (2) by means of a lever connection (3), wherein the wheel carrier (2) is coupled to at least one frame bar (17, 18, 19) by means of an articulated connection (5, 6, 7) separate from the wheel carrier, and wherein the articulated connection has a substantially vertical pivot axis (5) substantially in a line between the articulated mounting of the steering bar (4) on the frame (8) and the support of the front wheel (1) on the wheel carrier (2) and substantially parallel to the steering bar (4), **characterized in that** the steering bar (4) is comprised of a fork bar partially encompassing the front wheel, which fork bar, on its ends facing away from the handlebar (9), is coupled to the fork-like wheel carrier (2) via the lever connection (3).

2. A front wheel suspension according to claim 1, **characterized in that** the lever connection (3) engages at the wheel carrier (2) at a distance from the mounting of the axle (11) of the front wheel (1).

3. A front wheel suspension according to claim 1 or 2, **characterized in that** the coupling of the wheel carrier (2) to at least one frame bar (17, 18, 19) is effected via an articulated lever connection (5, 6, 7).

4. A front wheel suspension according to any one of claims 1 to 3, **characterized in that** the articulated connection comprised of an articulated lever connection is formed by a swing arm (6) pivotally hinged to a frame bar as well as a pivotable suspension strut (7) coupled thereto and hinged to a further frame bar (17, 19), in particular a frame bar receiving a saddle (16).

5. A front wheel suspension according to claim 4, **characterized in that** the spring travel of the suspension strut (7) is adjustable.

6. A front wheel suspension according to any one of claims 1 to 5, **characterized in that** displacement paths of the lever connection (3) and/or the articulated connection (5, 6, 7) are configured to be adjustable and limitable.

## Revendications

1. Suspension de roue avant pour un véhicule monotrace, en particulier pour une moto, une bicyclette ou similaire, sachant qu'une roue avant (1) est montée de manière à pouvoir tourner au niveau d'un support de roue (2) présentant une forme de fourche et que le support de roue (2) est couplé ou peut être couplé à un châssis et à un longeron de direction (4) du véhicule relié à un guidon (9), sachant que le longeron de direction (4) est couplé au support de roue (2) par l'intermédiaire d'un dispositif d'assemblage à levier (3), sachant que le support de roue (2) est couplé à au moins un longeron de châssis (17, 18, 19) par l'intermédiaire d'un dispositif d'assemblage (5, 6, 7) articulé séparé dudit support de roue, et sachant que le dispositif d'assemblage articulé présente un axe de pivotement (5) essentiellement vertical essentiellement dans une ligne entre le point d'articulation du longeron de direction (4) au niveau du châssis (8) et le palier de la roue avant (1) au niveau du support de roue (2) et essentiellement de manière parallèle par rapport au longeron de direction (4), **caractérisée en ce que** le longeron de direction (4) est formé par un longeron de type fourche entourant en partie la roue avant, lequel longeron de type fourche est couplé, au niveau de ses extrémités opposées au guidon (9), au support de roue (2) se présentant sous la forme d'une fourche, par l'intermédiaire d'un dispositif d'assemblage à levier (3).

2. Suspension de roue avant selon la revendication 1, **caractérisée en ce que** le dispositif d'assemblage à levier (3) vient en prise avec le support de roue (2) à distance du palier de l'axe (11) de la roue avant (1).

3. Suspension de roue avant selon la revendication 1 ou 2, **caractérisée en ce que** le couplage du support de roue (2) à au moins un longeron de châssis (17, 18, 19) se fait par l'intermédiaire d'un dispositif d'assemblage articulé à levier (5, 6, 7).

4. Suspension de roue avant selon l'une quelconque des revendications 1 à 3, **caractérisée en ce que** le dispositif d'assemblage articulé formé par un dispositif d'assemblage articulé à levier est formé par une coulisse (6) articulée au niveau d'un longeron de châssis de manière à pouvoir pivoter et par une jambe de force (7) pouvant pivoter et couplée à ladite coulisse, laquelle jambe de force est articulée au niveau d'un autre longeron de châssis (17, 19), en particulier au niveau d'un longeron de châssis recevant une selle (16).

5. Suspension de roue avant selon la revendication 4, **caractérisée en ce que** le débattement de la jambe de force (7) peut être ajusté.

6. Suspension de roue avant selon l'une quelconque des revendications 1 à 5, **caractérisée en ce que** des courses de réglage du dispositif d'assemblage à levier (3) et/ou du dispositif d'assemblage articulé (5, 6, 7) sont réalisées de manière à pouvoir être ajustées ou limitées.
